# EUROPEAN PATENT APPLICATION

(11) **EP 2 561 985 A1**
(43) Date of publication of application: **27.02.2013**
(21) Application number: 11771832.0
(22) Date of filing: 24.03.2011
(51) Int. Cl.: B32B 27/36, B32B 27/40, C08J 7/04, G02B 5/02

(54) **LAMINATED POLYESTER FILM**

(30) Priority: 19.04.2010 JP 2010096109; 19.04.2010 JP 2010096072
(71) Applicant: Mitsubishi Plastics, Inc., Tokyo 100-8252 (JP)
(72) Inventor: KATO, Yuzo, Maibara-shi Shiga 521-0234 (JP); KAWASAKI, Taishi, Maibara-shi Shiga 521-0234 (JP); FUJITA, Masato, Maibara-shi Shiga 521-0234 (JP)
(74) Representative: TER MEER - STEINMEISTER & PARTNER GbR
(86) International application number: PCT/JP2011/057166
(87) International publication number: WO 2011/132495

(57) **Abstract**

The present invention provides a laminated polyester film which can be suitably used in the applications requiring good adhesion to a micro-lens layer, a prism layer or the like, for example, in the optical applications such as a backlight unit for liquid crystal displays, etc. The laminated polyester film of the present invention comprises a polyester film, and (A) a coating layer comprising a urethane resin and an isocyanate compound derived from an aliphatic isocyanate or an alicyclic isocyanate or (B) a coating layer comprising a urethane resin having a polycarbonate structure and an isocyanate-based compound, which is formed on at least one surface of the polyester film.

## Description

### TECHNICAL FIELD

The present invention relates to a polyester film which is provided thereon with a coating layer having an excellent adhesion property to various kinds of topcoat agents.

### BACKGROUND ART

In recent years, liquid crystal displays have been extensively used as a display device for TVs, personal computers, digital cameras, cellular phones, etc. The liquid crystal displays have no light-emitting function by themselves. Therefore, liquid crystal displays of such a type in which light is irradiated from a backside thereof using a backlight have now come to dominate.

As the backlight type liquid crystal displays, there are known those having a so-called edge light type structure or a so-called direct backlight type structure. With the recent tendency toward reduction in thickness of liquid crystal displays, the edge light type liquid crystal displays have been more frequently employed. The edge light type liquid crystal displays are generally constructed from a reflection sheet, a light guide plate, a light diffusion sheet and a prism sheet which are successively laminated in this order. The flow of light through such edge light type liquid crystal displays is designed such that the light entered from the backlight into the light guide plate is reflected on the reflection sheet and then emitted from the surface of the light guide plate. The light emitted from the light guide plate is entered into the light diffusion sheet, diffused therein and then emitted therefrom. The light emitted from the light diffusion sheet then enters into the prism sheet disposed next to the light diffusion sheet. In the prism sheet, the light entering thereinto is converged in the normal direction and emitted therefrom toward the liquid crystal layer.

The prism sheet used in the above construction serves for improving an optical efficiency of the backlight and enhancing a brightness thereof. As a transparent base film for the prism sheet, there has been generally used a polyester film in view of a transparency and mechanical properties thereof. In general, an easy-bonding coating layer may be further provided as an intermediate layer between the polyester film as the base material and the prism layer in order to enhance adhesion therebetween. It is known that the easy-bonding coating layer is formed of, for example, a polyester resin, an acrylic resin or a urethane resin (Patent Documents 1 to 3).

The prism layer may be produced, for example, by the following method. That is, an active energy ray-curable coating material is charged into a prism mold, and then a polyester film is placed on the coating material thus charged so as to interpose the coating material between the polyester film and the mold. Next, an active energy ray is irradiated to the active energy ray-curable coating material to cure the resin, and then the mold is removed from the cured resin, thereby obtaining the prism layer formed on the polyester film. In such a method, in order to form an accurate prism pattern on the prism layer, it is required to use a solvent-free type active energy ray-curable coating material. However, the solvent-free type coating material tends to be deteriorated in penetration into an easy-bonding layer laminated on the polyester film and swelling effect therein as compared to a solvent type coating material and, therefore, tends to be insufficient in adhesion to the polyester film. In order to improve the adhesion property to the above coating material, a coating layer comprising a specific urethane resin has been proposed. However, even such a coating layer may still fail to exhibit a sufficient adhesion property to the solvent-free type coating material (Patent Document 4).

### Prior Art Documents

### Patent Documents

Patent Document 1: Japanese Patent Application Laid-Open (KOKAI) No. 8-281890
Patent Document 2: Japanese Patent Application Laid-Open (KOKAI) No. 11-286092
Patent Document 3: Japanese Patent Application Laid-Open (KOKAI) No. 2000-229395
Patent Document 4: Japanese Patent Application Laid-Open (KOKAI) No. 2-158633

### SUMMARY OF THE INVENTION

### Problems to be Solved by the Invention

The present invention has been accomplished to solve the above conventional problems. An object of the present invention is to provide a laminated polyester film which can exhibit a good adhesion property even though the amount of active energy rays irradiated is small, and can be suitably used, for example, as a member for micro-lens or prism sheets employed in a backlight unit for liquid crystal displays, etc.

### Means for Solving Problems

As a result of the present inventors' earnest study in view of the above problems, it has been found that the above problems can be readily solved by using a laminated polyester film having a specific structure. The present invention has been attained on the basis of this finding.

That is, in a first aspect of the present invention, there is provided a laminated polyester film comprising
a polyester film and
a coating layer which is formed on at least one surface of the polyester film and which comprises a urethane resin and an isocyanate compound derived from an aliphatic isocyanate or an alicyclic isocyanate.

In a second aspect of the present invention, there is provided a laminated polyester film comprising:
a polyester film and
a coating layer which is formed on at least one surface of the polyester film and which comprises a urethane resin having a polycarbonate structure and an isocyanate-based compound.

### EFFECT OF THE INVENTION

In accordance with the present invention, there can be provided a laminated polyester film which is excellent in adhesion property and a wet heat resistance when a micro-lens, a prism layer or the like is formed thereon.
Therefore, the present invention has a high industrial value.

### PREFERRED EMBODIMENTS FOR CARRYING OUT THE INVENTION

The present invention is described in more detail below.
The polyester film constituting the laminated polyester film of the present invention may have either a single layer structure or a multilayer structure. Unless departing from the scope of the present invention, the polyester film may have not only a two or three layer structure but also a four or more multilayer structure, and the layer structure of the polyester film is not particularly limited.

The polyester used in the present invention may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like. On the other hand, as a dicarboxylic acid component of the copolyester, there may be mentioned one or more compounds selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the polyester, there may be mentioned one or more compounds selected from the group consisting of ethylene glycol, diethylene glycol, propylene glycol, butanediol, 4-cyclohexanedimethanol and neopentyl glycol.

The polyester used in the present invention may be produced by conventionally known methods, for example, the method of directly reacting a dicarboxylic acid and a diol to obtain a polyester having a low polymerization degree, or the method of reacting a lower alkyl ester of a dicarboxylic acid and a diol in the presence of a conventionally known transesterification catalyst and then subjecting the resulting reaction product to polymerization reaction in the presence of a polymerization catalyst. As the polymerization catalyst, there may be used conventionally known catalysts such as antimony compounds, germanium compounds and titanium compounds. However, the content of a metal element in these compounds is preferably reduced to not more than 100 ppm because the resulting film can be prevented from dulling. Among these polymerization catalysts, from the viewpoint of less deterioration in brightness of displays, germanium compounds and titanium compounds are preferred as compared to antimony compounds.

Upon production of the polyester film used in the present invention, when using a titanium compound as the polymerization catalyst, the polyester film preferably comprises both the titanium compound and a phosphorus compound. The content of a titanium element in at least one layer of the film used in the present invention is required to be not more than 20 ppm, and is preferably not more than 10 ppm. The lower limit of the titanium element content is usually 1 ppm and preferably 2 ppm. When the content of the titanium compound is excessively large, the resulting film tends to be deteriorated in brightness or suffer from undesirable coloration. When no titanium element is present in the polyester film, there tends to occur deterioration in productivity upon production of the raw polyester material, and it may be difficult to obtain the raw polyester material having an aimed polymerization degree. On the other hand, the content of a phosphorus element in the polyester film is preferably not less than 1 ppm and more preferably not less than 5 ppm. The upper limit of the phosphorus element content is 300 ppm, preferably 200 ppm and more preferably 100 ppm. The content of the phosphorus compound in the polyester film is excessively large, the resulting film tends to suffer from gelation, and therefore tends to be deteriorated in quality owing to formation of foreign matters derived from the gelled products. By incorporating the titanium compound and the phosphorus compound in the above-specified ranges, the resulting film can be prevented from suffering from by-production of oligomers and can exhibit a high transparency.

For the main purposes of imparting an easy-slipping property to the film and preventing occurrence of flaws in the film, particles are preferably blended in the polyester layer in the film of the present invention. The kind of particles to be blended in the polyester layer is not particularly limited, and any particles may be used as long as the particles are capable of imparting a good easy-slipping property to the film. Specific examples of the particles include particles of silica, calcium carbonate, magnesium carbonate, barium carbonate, calcium sulfate, calcium phosphate, magnesium phosphate, kaolin, aluminum oxide, titanium oxide, etc. In addition, there may also be used heat-resistant organic particles as described in Japanese Patent Publication (KOKOKU) No. 59-5216, Japanese Patent Application Laid-Open (KOKAI) No. 59-217755 or the like. Examples of the other heat-resistant organic particles include particles of thermosetting urea resins, thermosetting phenol resins, thermosetting epoxy resins, benzoguanamine resins, etc. Further, there may also be used deposited particles obtained by precipitating and finely dispersing a part of metal compounds such as a catalyst during the process for production of the polyester.

On the other hand, the shape of the particles used in the polyester layer is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the particles used in the polyester layer is usually in the range of 0.01 to 3 *µ*m and preferably 0.1 to 2 *µ*m. When the average particle diameter of the particles is less than 0.01 *µ*m, the particles may fail to impart an easy-slipping property to the polyester layer, or tend to be aggregated together and therefore exhibit a poor dispersibility therein, which tends to cause deterioration in transparency of the resulting film. On the other hand, when the average particle diameter of the particles is more than 3 *µ*m, the obtained film tends to have an excessively coarse surface roughness, thereby causing problems in the subsequent steps upon forming a functional layer such as a prism layer and a light diffusion layer on the polyester layer.

The content of the particles in the polyester layer is usually in the range of 0.0001 to 5% by weight and preferably 0.0003 to 3% by weight. When the content of the particles in the polyester layer is less than 0.0001% by weight, the resulting film tends to be insufficient in easy-slipping property. On the other hand, when the content of the particles in the polyester layer is more than 5% by weight, the resulting film tends to be insufficient in transparency.

The method of adding the particles to the polyester layer is not particularly limited, and any conventionally known methods can be suitably used therefor. For example, the particles may be added at any optional stages in the process for production of the polyester forming the respective layers. The particles are preferably added to the polyester after completion of the esterification reaction or transesterification reaction.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder, or the like.

Meanwhile, the polyester film used in the present invention may also comprise, in addition to the above particles, conventionally known additives such as an antioxidant, an antistatic agent, an ultraviolet absorber, a thermal stabilizer, a lubricant, a dye, a pigment, etc., if required.

The thickness of the polyester film used in the present invention is not particularly limited, and the polyester film may have any thickness as long as it can be produced with a suitable film shape. The thickness of the polyester film is usually in the range of 10 to 350 *µ*m and preferably 50 to 250 *µ*m.

Next, an example of the process of producing the polyester film used in the present invention is more specifically explained, although not particularly limited thereto. That is, in the production process, there is preferably used such a method in which the above-mentioned raw polyester material is extruded from a die in the form of a molten sheet, and the molten sheet is cooled and solidified on a cooling roll to obtain an unstretched sheet. In this case, in order to enhance a flatness of the obtained sheet, it is preferred to enhance adhesion between the sheet and the rotary cooling drum. For this purpose, an electrostatic adhesion method and/or a liquid coating adhesion method are preferably used. Next, the thus obtained unstretched sheet is biaxially stretched. In such a case, the unstretched sheet is first stretched in one direction thereof using a roll-type or tenter-type stretching machine. The stretching temperature is usually 70 to 120°C and preferably 80 to 110°C, and the stretch ratio is usually 2.5 to 7 times and preferably 3.0 to 6 times. Next, the thus stretched film is stretched in the direction perpendicular to the stretching direction of the first stage. In this case, the stretching temperature is usually 70 to 170°C, and the stretch ratio is usually 3.0 to 7 times and preferably 3.5 to 6 times. Successively, the resulting biaxially stretched sheet is heat-treated at a temperature of 180 to 270°C under a tension or relaxation within 30% to obtain a biaxially oriented film. Upon the above stretching steps, there may also be used the method in which the stretching in each direction is carried out in two or more stages. In such a case, the multi-stage stretching is preferably performed such that the stretch ratio in each of the two directions is finally fallen within the above-specified range.

Also, upon producing the polyester film constituting the laminated polyester film according to the present invention, there may also be used a simultaneous biaxial stretching method. The simultaneous biaxial stretching method is such a method in which the above unstretched sheet is stretched and oriented in both of the machine and width directions at the same time while maintaining the sheet in a suitable temperature-controlled condition at a temperature of usually 70 to 120°C and preferably 80 to 110°C. The stretch ratio used in the simultaneous biaxial stretching method is 4 to 50 times, preferably 7 to 35 times and more preferably 10 to 25 times in terms of an area ratio of the sheet to be stretched. Successively, the obtained biaxially stretched sheet is heat-treated at a temperature of 170 to 250°C under a tension or relaxation within 30% to obtain a stretched oriented film. As the apparatus used in the above simultaneous biaxial stretching method, there may be employed those stretching apparatuses of any conventionally known type such as a screw type stretching apparatus, a pantograph type stretching apparatus and a linear drive type stretching apparatus.

The polyester film used in the present invention is provided on at least one surface thereof with a coating layer. However, the other coating layer or functional layer may be formed on a surface of the polyester film which is opposed to the surface where the coating layer of the present invention is provided. As a matter of course, the thus both side-coated polyester film is also involved within the scope of the present invention.

Next, the method of forming the coating layer constituting the laminated polyester film according to the present invention is explained. The coating layer may be formed either by an in-line coating method in which the surface of the polyester film is subjected to coating treatment during the stretching step of the polyester film, by an off-line coating method in which the polyester film produced is once transferred to an outside of the film production system and subjected to coating treatment, or by combination of these methods. Among these methods, the in-line coating method is preferably used because the coating material can be applied simultaneously with formation of the polyester film and therefore the coating layer can be produced at low costs, and the thickness of the coating layer can be varied by controlling a stretch ratio of the polyester film.

For example, in the case of a sequential biaxial stretching, the in-line coating treatment may be carried out, in particular, after completion of the longitudinal stretching but before initiation of the lateral stretching, although not particularly limited thereto. When the coating layer is formed on the polyester film by the in-line coating method, the coating can be carried out simultaneously with formation of the polyester film, and the coating layer can be treated at a high temperature. As a result, it is possible to produce a film suitable as the polyester film used in the present invention.

Next, the coating layer formed in the laminated polyester film of the present invention is described.
The coating layer according to the first aspect of the present invention is a coating layer comprising a urethane resin and an isocyanate compound derived from an aliphatic isocyanate or an alicyclic isocyanate.
The coating layer according to the second aspect of the present invention is a coating layer comprising a urethane resin having a polycarbonate structure and an isocyanate-based compound.

As a result of various earnest studies, it has been found that when forming the above specific coating layer on the polyester film, the resulting film can be enhanced in adhesion to a prim layer or a micro-lens layer.

The coating layer according to the present invention is a coating layer capable of enhancing adhesion to various layers, in particular, a solvent-free active energy ray-curable layer. On the coating layer, there may be formed, for example, a prism layer or a micro-lens layer.

### <Coating layer according to the first aspect of the present invention>

The urethane resin used in the coating layer according to the first aspect of the present invention is a high-molecular compound having a urethane bond in a molecule thereof. The urethane resin may be usually produced by the reaction between a polyol and an isocyanate. Examples of the polyol include polycarbonate polyols, polyester polyols, polyether polyols, polyolefin polyols and acrylic polyols. These compounds may be used alone or in combination of any two or more thereof.

The polycarbonate polyols may be obtained by subjecting a polyhydric alcohol and a carbonate compound to dealcoholization reaction. Examples of the polyhydric alcohol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane. Examples of the carbonate compound include dimethyl carbonate, diethyl carbonate, diphenyl carbonate and ethylene carbonate. Examples of the polycarbonate polyols obtained by the reaction between the above compounds include poly(1,6-hexylene)carbonate and poly(3-methyl-1,5-pentylene)carbonate.

Examples of the polyester polyols include those produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol).

Examples of the polyether polyols include polyethylene glycol, polypropylene glycol, polyethylene/propylene glycol, polytetramethylene ether glycol and polyhexamethylene ether glycol.

In order to enhance adhesion to various topcoat layers, among the above polyols, preferred are polycarbonate polyols.

Examples of a polyisocyanate compound used for producing the urethane resin include aromatic isocyanates such as tolylene diisocyanate, xylylene diisocyanate, methylene diphenyl diisocyanate, phenylene diisocyanate, naphthalene diisocyanate and tolidine diisocyanate; aromatic ring-containing aliphatic isocyanates such as α,α,α',α'-tetramethyl xylylene diisocyanate; aliphatic isocyanates such as methylene diisocyanate, propylene diisocyanate, lysine diisocyanate, trimethyl hexamethylene diisocyanate and hexamethylene diisocyanate; and alicyclic isocyanates such as cyclohexane diisocyanate, methyl cyclohexane diisocyanate, isophorone diisocyanate, dicyclohexylmethane diisocyanate and isopropylidene dicyclohexyl diisocyanate. These polyisocyanate compounds may be used alone or in combination of any two or more thereof. In addition, among these isocyanates, from the viewpoint of prevention of yellow discoloration owing to irradiation with ultraviolet rays, aliphatic isocyanates or alicyclic isocyanates are preferably used as compared to aromatic isocyanates.

When the urethane resin is synthesized, there may be used a chain extender. The chain extender is not particularly limited, and any chain extender may be used as long as it has two or more active groups capable of reacting with an isocyanate group. In general, there may be mainly used such a chain extender having two hydroxyl groups or two amino groups.

Examples of the chain extender having two hydroxyl groups include glycols, e.g., aliphatic glycols such as ethylene glycol, propylene glycol, butanediol and pentanediol; aromatic glycols such as xylylene glycol and bishydroxyethoxybenzene; and ester glycols such as neopentyl glycol and neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; and alicyclic diamines such as 1-amino-3-aminomethyl-3,5,5-trimethyl cyclohexane, dicyclohexylmethanediamine, isopropylidenecyclohexyl-4,4'-diamine, 1,4-diaminocyclohexane, 1,3-bisaminomethyl cyclohexane and isophorone diamine.

The urethane resin used in the present invention may be dispersed or dissolved in a solvent as a medium, and is preferably dispersed or dissolved in water as the medium.
In order to disperse or dissolve the urethane resin in water, there may be used those urethane resins of a forcibly emulsifiable type which can be dispersed and dissolved using an emulsifier, or those urethane resins of a self-emulsifiable type or a water-soluble type which are obtained by introducing a hydrophilic group into urethane resins, etc. Among these urethane resins, in particular, self-emulsifiable type urethane resins which are ionomerized by introducing an ionic group into a skeleton of urethane resins are preferred because they are excellent in storage stability of the coating solution as well as water resistance, transparency and adhesion property of the resulting coating layer. Examples of the ionic group to be introduced into the urethane resins include various groups such as a carboxyl group, a sulfonic acid group, a phosphoric acid group, a phosphonic acid group and a quaternary ammonium salt group. Among these ionic groups, preferred is a carboxyl group. As the method of introducing a carboxyl group into the urethane resin, there may be used various methods which may be carried out in respective stages of the polymerization reaction. For example, there may be used the method in which a carboxyl group-containing resin is used as a comonomer component upon synthesis of a prepolymer, or the method in which a carboxyl group-containing component is used as one of components of the polyol, the polyisocyanate, the chain extender or the like. In particular, there is preferably used the method in which a carboxyl group-containing diol is used to introduce a desired amount of a carboxyl group into the urethane resins by suitably adjusting an amount of the diol component charged. For example, the diol used in the polymerization for production of the urethane resin may be copolymerized with dimethylol propionic acid, dimethylol butanoic acid, bis-(2-hydroxyethyl)propionic acid, bis-(2-hydroxyethyl)butanoic acid, etc. In addition, the carboxyl group thus introduced is preferably formed into a salt thereof by neutralizing the carboxyl group with ammonia, amines, alkali metals, inorganic alkalis, etc. Among these compounds used for the neutralization, especially preferred are ammonia, trimethylamine and triethylamine.

The isocyanate compound derived from an aliphatic isocyanate or an alicyclic isocyanate which is used in the coating layer according to the first aspect of the present invention means a compound derived from an aliphatic isocyanate, and a blocked isocyanate derivative obtained by blocking an isocyanate group of the aliphatic isocyanate. Examples of the isocyanate compound include aromatic ring-containing aliphatic isocyanates such as α,α,α',α'-tetramethylxylylene diisocyanate; aliphatic isocyanates such as methylene diisocyanate, propylene diisocyanate, lysine diisocyanate, trimethylhexamethylene diisocyanate and hexamethylene diisocyanate; and alicyclic diisocyanates such as cyclohexane diisocyanate, methyl cyclohexane diisocyanate, isophorone diisocyanate, methylene bis(4-cyclohexyl isocyanate) and isopropylidene dicyclohexyl diisocyanate. These isocyanates may be used alone or in combination of any two or more thereof. Among these isocyanates, from the viewpoint of enhanced adhesion to active energy ray-curable resins, preferred is hexamethylene diisocyanate.

Examples of the blocking agent used for production of the blocked isocyanates used in the present invention include bisulfites; phenol-based compounds such as phenol, cresol and ethyl phenol; alcohol-based compounds such as propylene glycol monomethyl ether, ethylene glycol, benzyl alcohol, methanol and ethanol; active methylene-based compounds such as dimethyl malonate, diethyl malonate, methyl acetoacetate, ethyl acetoacetate and acetyl acetone; mercaptan-based compounds such as butyl mercaptan and dodecyl mercaptan; lactam-based compounds such as ε-caprolactam and δ-valerolactam; amine-based compounds such as diphenyl aniline, aniline and ethylene imine; acid amide compounds such as acetanilide and acetic acid amide; oxime-based compounds such as formaldehyde, acetaldoxime, acetone oxime, methyl ethyl ketone oxime and cyclohexanone oxime. These blocking agents may be used alone or in combination of any two or more thereof.

Further, the coating layer may also comprise a crosslinking agent unless the effects of the present invention are adversely influenced. As the crosslinking agent, there may be used various crosslinking agents. Examples of the crosslinking agent include amino resin-based crosslinking agents such as melamine and benzoguanamine, oxazoline-based crosslinking agents, carbodiimide-based crosslinking agents and epoxy compound-based crosslinking agents, as well as co-called polymer-type crosslinking agents obtained by copolymerizing the above crosslinkable functional reactive groups into a skeleton of the other polymer.

In order to improve a slipping property and an anti-blocking property of the film, the coating layer preferably comprises particles as a constitutional component of the coating layer.
The average particle diameter of the particles is preferably in the range of not more than 0.15 *µ*m and more preferably not more than 0.12 *µ*m from the viewpoint of a high transparency of the resulting film. In addition, from the viewpoints of a high fixing property and a good slipping property, the average particle diameter of the particles is preferably in the range of not less than 0.03 *µ*m and more preferably not less than 0.05 *µ*m.
The content of the particles in the coating layer is preferably in the range of 3 to 25% by weight, more preferably 5 to 15% by weight and still more preferably 5 to 10% by weight in terms of a weight ratio thereof based on a total weight of the coating layer. When the content of the particles in the coating layer is less than 3% by weight, the effects of imparting a slipping property and preventing occurrence of blocking tends to be insufficient. On the other hand, when the content of the particles in the coating layer is more than 25% by weight, the resulting coating layer tends to be deteriorated in transparency as well as continuity, so that there tend to occur problems such as deteriorated coating film strength and poor easy-bonding property.

Examples of the particles used in the coating layer include inorganic particles such as particles of silica, alumina and metal oxides, and organic particles such as crosslinked polymer particles. In particular, from the viewpoints of a good dispersibility in the coating layer and a good transparency of the resulting coating film, silica particles are preferably used.

In the coating layer according to the present invention, in order to improve surface properties of the coating layer and enhance a visibility when forming various layers such as a micro-lens layer and a prism layer on the surface of the coating layer as well as improve a transparency of the resulting film, a binder polymer other than the above urethane resin may be used in combination therewith.

The "binder polymer" used in the present invention is defined as a high-molecular compound having a number-average molecular weight (Mn) of not less than 1000 as measured by gel permeation chromatography (GPC) according to a flow scheme for evaluation of safety of high-molecular compounds (Council of Chemical Substances; November, 1985), and exhibiting a good film-forming property.

Specific examples of the binder polymer include polyester resins, acrylic resins, urethane resins having no polycarbonate structure, polyvinyl resins (such as polyvinyl alcohol, polyvinyl chloride and vinyl chloride-vinyl acetate copolymers), polyalkylene glycols, polyalkylene imines, methyl cellulose, hydroxy cellulose, starches, etc.

Further, the coating layer may also comprise various additives such as a defoaming agent, a coatability improver, a thickening agent, an organic lubricant, an antistatic agent, an ultraviolet absorber, an antioxidant, a foaming agent and a dye, if required, unless the subject matter of the present invention is adversely affected thereby.

In the present invention, the content of the above urethane resin in the coating layer is usually 5 to 90% by weight, preferably 10 to 80% by weight and more preferably 10 to 75% by weight. When the content of the urethane resin in the coating layer is less than 5% by weight, the resulting coating layer tends to be insufficient in adhesion property owing to the less content of the urethane resin component. When the content of the urethane resin in the coating layer is more than 90% by weight, the resulting coating layer tends to become brittle owing to the less content of the isocyanate compound derived from an aliphatic isocyanate or an alicyclic isocyanate, and therefore tends to be insufficient in adhesion property or wet heat resistance.

In the present invention, the content of the isocyanate compound derived from an aliphatic isocyanate or an alicyclic isocyanate in the coating layer is usually 5 to 90% by weight, preferably 10 to 85% by weight and more preferably 20 to 70% by weight. When the content of the isocyanate compound derived from an aliphatic isocyanate or an alicyclic isocyanate in the coating layer is less than 5% by weight, the resulting coating layer tends to become brittle owing to the less content of the isocyanate compound and therefore tends to be insufficient in adhesion property as well as wet heat resistance. When the content of the isocyanate compound derived from an aliphatic isocyanate or an alicyclic isocyanate in the coating layer is more than 90% by weight, the resulting coating layer tends to be insufficient in adhesion property owing to the less content of the urethane resin component.

The analysis of the respective components contained in the coating layer may be conducted, for example, by surface analysis such as TOF-SIMS.

### <Coating layer according to the second aspect of the present invention>

The coating layer according to the second aspect of the present invention is a coating layer comprising a urethane resin having a polycarbonate structure and an isocyanate-based compound.
The coating layer according to the second aspect of the present invention is different from the coating layer according to the first aspect of the present invention in that the urethane resin used in the former is limited to the urethane resin having a polycarbonate structure, and the isocyanate-based compound used in the former is not limited to the isocyanate compound derived from an aliphatic isocyanate or an alicyclic isocyanate and may be an aromatic isocyanate compound.
Therefore, all of the explanation items regarding the coating layer according to the first aspect of the present invention except for the above different points are applied to those regarding the coating layer according to the second aspect of the present invention unless otherwise specified.

The glass transition point of the urethane resin having a polycarbonate structure (hereinafter occasionally referred to merely as "Tg") is preferably not higher than 0°C, more preferably not higher than -15°C and still more preferably not higher than -30°C. When Tg of the urethane resin is higher than 0°C, the resulting coating layer tends to be insufficient in easy-bonding property. The "Tg" as used herein means a temperature of a dried film of the urethane resin as measured using a differential scanning colorimeter (DSC).

Examples of the aromatic isocyanate compound usable in the coating layer according to the second aspect of the present invention include tolylene diisocyanate, xylylene diisocyanate, methylene diphenyl diisocyanate, phenylene diisocyanate, naphthalene diisocyanate and tolidine diisocyanate. Among the above isocyanate compounds, from the viewpoint of avoiding occurrence of undesired yellow discoloration owing to irradiation with an ultraviolet ray, the aliphatic isocyanates and alicyclic isocyanates are preferably used as compared to the aromatic isocyanates

When forming the coating layer by an in-line coating method, the laminated polyester film is preferably produced by the method in which an aqueous solution or a water dispersion comprising a series of the above mentioned compounds is prepared as a coating solution having a concentration of about 0.1 to about 50% by weight in terms of a solid content thereof, and the thus prepared coating solution is applied onto the polyester film. The coating solution may also comprise a small amount of an organic solvent for the purpose of improving a dispersibility in water, a film-forming property, etc., unless the subject matter of the present invention is adversely affected thereby. The organic solvent may be used alone, or may be appropriately used in the form of a mixture of any two or more kinds thereof.

In the laminated polyester film of the present invention, the coating amount of the coating layer formed on the polyester film is usually in the range of 0.002 to 1.0 g/m², preferably 0.005 to 0.5 g/m² and more preferably 0.01 to 0.2 g/m². When the coating amount of the coating layer is less than 0.002 g/m², the resulting coating layer may fail to exhibit a sufficient adhesion property. When the coating amount of the coating layer is more than 1.0 g/m², the resulting coating layer tends to be deteriorated in appearance and transparency, and the obtained laminated film tends to be deteriorated in anti-blocking property.

In the present invention, as the method of forming the coating layer, there may be used conventionally known coating methods such as a reverse gravure coating method, a direct gravure coating method, a roll coating method, a die coating method, a bar coating method and a curtain coating method which are described, for example, in Yuji HARAZAKI, "Coating Methods", Maki-shoten, 1979.

In the present invention, the drying and curing conditions used upon forming the coating layer on the polyester film are not particularly limited. For example, in the case where the coating layer is formed in an off-line coating manner, the coating layer may be subjected to heat treatment usually at a temperature of 80 to 200°C for 3 to 40 sec and preferably at a temperature of 100 to 180°C for 3 to 40 sec.

On the other hand, in the case where the coating layer is formed in an in-line coating manner, the coating layer may be subjected to heat treatment usually at a temperature of 70 to 280°C for 3 to 200 sec.

In any of the off-line coating method and the in-line coating method, the heat treatment may be used in combination with irradiation with active energy rays such as irradiation with ultraviolet rays, if required. The polyester film constituting the laminated polyester film of the present invention may be previously subjected to surface treatments such as corona treatment and plasma treatment.

The coating layer of the laminated polyester film according to the present invention is generally provided thereon with a prism layer, a micro-lens layer or the like in order to improve a brightness of the film. In recent years, in order to efficiently enhance a brightness of films, there have been proposed prism layers of various shapes. In general, the prism layers have plural rows of prisms each having a triangular sectional shape which are arranged in parallel with each other. Also, there have been proposed micro-lens layers of various shapes. In general, the micro-lens layers have a structure in which a number of semispherical convex lenses are provided on a film. Both of the prism layer and the micro-lens layer may respectively have any conventionally known shapes.

The prism layer may have, for example, such a shape in which a thickness of the layer is 10 to 500 *µ*m, rows of prisms have a pitch of 10 to 500 *µ*m, and respective prisms have a triangular sectional shape having an apex angle of 40° to 100°. As the material of the prism layer, there may be used conventionally known materials. Examples of the material of the prism layer include active energy ray-curable resins, more specifically, polyester resins, epoxy resins, and (meth)acrylate-based resins such as polyester (meth)acrylates, epoxy (meth)acrylates and urethane (meth)acrylates.

The micro-lens layer may have, for example, such a shape in which a thickness of the layer is 10 to 500 *µ*m, and respective lenses have a semispherical shape having a diameter of 10 to 500 *µ*m. The shape of each lens of the micro-lens layer may also be a conical shape or a pyramidal shape. As the material of the micro-lens layer, conventionally known materials may be used therefor similarly to the prism layer. Examples of the material of the micro-lens layer include active energy ray-curable resins.

### EXAMPLES

The present invention is described in more detail below by Examples. However, these Examples are only illustrative and not intended to limit the present invention thereto. Among the following Examples and Comparative Examples, the mark "A" is affixed to those relating to the above first aspect of the present invention, whereas the mark "B" is affixed to those relating to the above second aspect of the present invention. Meanwhile, the measuring and evaluating methods used in the following Examples and Comparative Examples are as follows.

### (1) Measurement of intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Measurement of average particle diameter (d₅₀: µm):

Using a centrifugal precipitation type particle size distribution measuring apparatus "SA-CP3 Model" manufactured by Shimadzu Seisakusho Co., Ltd., the value of a particle size corresponding to a cumulative fraction of 50% (on the basis of weight) in equivalent spherical distribution of the particles was measured as an average particle diameter.

### (3) Measurement of glass transition point:

A water dispersion of a urethane resin was dried in a petri dish to obtain a resin film. The thus obtained resin film was heated in a temperature range of -100 to 100°C at a temperature rise rate of 10°C/min using "DSC 204F Phoenix" manufactured by NETZSCH Corp., to prepare a DSC chart, and measure a glass transition point of the resin on the basis of change in heat capacity.

### (4) Method for evaluating adhesion property:

The following active energy ray-curable resin composition was applied on a coating layer formed on a polyester film such that a thickness of a coating resin layer of the curable resin composition after dried was 3 *µ*m, and then an ultraviolet ray was irradiated thereover using an ultraviolet irradiation using an 80 watt high pressure mercury lamp with an intensity of 25 mJ/cm² to cure the resin, thereby obtaining a laminated polyester film having a layer structure of <polyester film/coating layer/active energy ray-cured resin layer>. Immediately after obtaining the laminated film (adhesion 1), the surface of the resin layer on the laminated film was cut using a cutter knife to form cuts at intervals of 5 mm (adhesion 2), and then a 24 mm-wide tape ("Cellotape (registered trademark) CT-24" produced by Nichiban Co., Ltd.) was attached onto the cut surface of the film, and then rapidly peeled off therefrom at a peel angle of 180°. Then, the surface of the laminated film from which the tape was peeled off was observed to measure an area of the resin layer peeled. The evaluation ratings are as follows.
A: Peeled area of the resin layer was not more than 5%.
B: Peeled area of the resin layer was more than 5% and not more than 20%.
C: Peeled area of the resin layer was more than 20% and not more than 50%.
D: Peeled area of the resin layer was more than 50%.

### • Active energy ray-curable resin composition:

Composition comprising 80 parts by weight of "KAYARAD DPHA" produced by Nippon Kayaku Co., Ltd., 20 parts by weight of "KAYARAD R-128H" produced by Nippon Kayaku Co., Ltd., and 5 parts by weight of "IRGACURE 651" produced Ciba Specialty Chemicals, Inc.

The polyesters used in the respective Examples and Comparative Examples were prepared by the following methods.

### <Method for producing polyester (A)>

One hundred parts by weight of dimethyl terephthalate and 60 parts by weight of ethylene glycol as starting materials were charged into a reaction vessel, and further tetrabutoxytitanate as a catalyst was charged into the reaction vessel in such an amount that a titanium (Ti) content therein was 5 ppm, and the reaction therebetween was initiated at 150°C. The reaction temperature was gradually raised while distilling off methanol as produced, and allowed to reach 230°C after 3 hr. After 4 hr, the transesterification reaction was substantially terminated, and then the resulting product was subjected to polycondensation reaction for 4 hr. More specifically, the reaction temperature was gradually raised from 230°C until reaching 280°C. On the other hand, the reaction pressure was gradually reduced from normal pressures until finally reaching 0.3 mmHg. After initiation of the reaction, the change in agitation power in the reaction vessel was monitored, and the reaction was terminated at the time at which a viscosity of the reaction solution reached the value corresponding to an intrinsic viscosity of 0.63 on the basis of the change in agitation power in the reaction vessel.
The resulting polymer was discharged under application of a nitrogen pressure from the reaction vessel, thereby obtaining a polyester (A) having an intrinsic viscosity of 0.63.

### <Method for producing polyester (B)>

One hundred parts by weight of dimethyl terephthalate and 60 parts by weight of ethylene glycol as starting materials were charged together with magnesium acetate tetrahydrate as a catalyst into a reaction vessel, and the reaction therebetween was initiated at 150°C. The reaction temperature was gradually raised while distilling off methanol as produced, and allowed to reach 230°C after 3 hr. After 4 hr, the transesterification reaction was substantially terminated. The obtained reaction mixture was transferred to a polycondensation reaction vessel, and mixed with orthophosphoric acid such that a phosphorus (P) content therein was 1000 ppm, and then mixed with germanium dioxide, followed by subjecting the resulting mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, the change in agitation power in the reaction vessel was monitored, and the reaction was terminated at the time at which a viscosity of the reaction solution reached the value corresponding to an intrinsic viscosity of 0.65 on the basis of the change in agitation power in the reaction vessel. The resulting polymer was discharged under application of a nitrogen pressure from the reaction vessel, thereby obtaining a polyester (B) having an intrinsic viscosity of 0.65.

### <Method for producing polyester (C)>

The same procedure as defined in the above method for producing the polyester (A) was conducted except that silica particles having an average particle diameter of 2 *µ*m in the form of a dispersion in ethylene glycol were added in an amount of 0.2 part, and the reaction was terminated at the time at which a viscosity of the reaction solution reached the value corresponding to an intrinsic viscosity of 0.66, thereby obtaining a polyester (C) having an intrinsic viscosity of 0.66.

The compounds constituting the coating layer are as follows. In the following, the "part(s)" represents a weight ratio of the respective resin components in terms of a resin solid content thereof.

### (U1: Urethane resin)

Water dispersion of a urethane resin which was obtained by neutralizing a urethane resin produced from 80 parts of a polycarbonate polyol having a number-average molecular weight of 2000 which was obtained from 1,6-hexanediol and diethyl carbonate, 4 parts of polyethylene glycol having a number-average molecular weight of 400, 12 parts of methylene bis(4-cyclohexyl isocyanate) and 4 parts of dimethylol butanoic acid with triethylamine (Tg of urethane resin: -3°C).

### (U2: Urethane resin)

Water dispersion of a urethane resin which was obtained by neutralizing a urethane resin produced from 400 parts of a polycarbonate polyol having a number-average molecular weight of 2000 which was obtained from 1,6-hexanediol and diethyl carbonate, 14 parts of butanediol, 15 parts of pentaethylene glycol, 100 parts of isophorone diisocyanate and 75 parts of dimethylol butanoic acid with triethylamine (Tg of urethane resin: -3°C).

### (U3: Urethane resin)

Water dispersion of a urethane resin which was obtained by neutralizing a prepolymer produced from 400 parts of a polycarbonate polyol having a number-average molecular weight of 2000 which was obtained from 1,6-hexanediol and diethyl carbonate, 10.4 parts of neopentyl glycol, 58.4 parts of cyclohexane diisocyanate and 74.3 parts of dimethylol butanoic acid with triethylamine, and then subjecting the neutralized product to chain extension reaction using isophorone diamine (Tg of urethane resin: -30°C).

### (U4: Urethane resin)

Urethane resin having a water-dispersed polyester structure and Tg of 10°C "HYDRAN AP-30" produced by DIC Corp.

### (C1: Isocyanate compound)

An aqueous blocked isocyanate-based compound comprising a blocked isocyanate obtained by blocking an isocyanate group of a polyisocyanate produced from 158 parts of hexamethylene diisocyanate and 26 parts of methoxypolyethylene glycol having a number-average molecular weight of 1400 with 66 parts of methyl ethyl ketone oxime, and a urethane resin which was obtained by neutralizing a prepolymer produced from 115 parts of a polycarbonate polyol having a number-average molecular weight of 2000 which was obtained from 1,6-hexanediol and diethyl carbonate, 1 part of trimethylol propane, 40 parts of isophorone diisocyanate and 8 parts of dimethylol propionic acid with triethylamine, and then subjecting the neutralized product to chain extension reaction using diethylene triamine.

### (C2: Isocyanate compound)

An aqueous blocked polyisocyanate compound obtained by blocking an isocyanate group of a polyisocyanate produced from 100 parts of an adduct of tolylene diisocyanate with trimethylol propane, 21 parts of methoxypolyethylene glycol having a number-average molecular weight of 2000 and 11 parts of tetramethylol ethylene diamine with 23 parts of methyl ethyl ketone oxime.

### (C3: Melamine compound)

Methoxymethylol melamine

### (C4: Oxazoline compound)

Polymer-type crosslinking agent "WS-500" (produced by Nippon Shokubai Co., Ltd.) in which an oxazoline group is bonded as a branched chain to an acrylic resin.

### (C5: Isocyanate-based compound)

A polyester resin-containing blocked isocyanate-based compound obtained by blocking an isocyanate group of a polyisocyanate comprising 200 parts of a polyester having a number-average molecular weight of 2000 produced from an adduct of bisphenol A with 2 mol of ethyleneoxide and maleic acid and 33.6 parts of hexamethylene diisocyanate with 84 parts of 30% sodium bisulfite.

### (C6: Epoxy compound)

A water-soluble epoxy compound as polyglycerol polyglycidyl ether "EX-521" (produced by Nagase Chemtex Co., Ltd.)

### (F1: Particles)

Silica sol having a particle diameter of 65 nm

### Example 1A:

A mixed raw material obtained by mixing the polyesters (A), (B) and (C) in amounts of 85%, 5% and 10%, respectively, as a raw material for outermost layers (surface layers), and a mixed raw material obtained by mixing the polyesters (A) and (B) in amounts of 95% and 5%, respectively, as a raw material for an intermediate layer, were respectively charged into two extruders, melted therein at 290°C, and then co-extruded therefrom on a cooling roll whose surface was controlled to a temperature of 40°C to form a sheet having a two-kind/three-layer structure (extrusion output: surface layer/intermediate layer/surface layer = 1/18/1), followed by cooling and solidifying the thus extruded sheet on the cooling roll, thereby obtaining an unstretched sheet. Next, the thus obtained unstretched sheet was stretched utilizing a difference between peripheral speeds of rolls at a film temperature of 85°C and a stretch ratio of 3.4 times in a longitudinal direction thereof. Thereafter, a coating solution 1A shown in the below-mentioned Table 1 was applied on one surface of the thus obtained longitudinally stretched sheet. Then, the resulting coated sheet was introduced into a tenter where the sheet was stretched at 120°C and a stretch ratio of 4.0 times in a lateral direction thereof and then heat-treated at 225°C. Then, the obtained stretched sheet was relaxed by 2% in a lateral direction thereof, thereby obtaining a polyester film having a thickness of 188 *µ*m which was provided with a coating layer having a coating amount (after dried) as shown in Table 2.

### Examples 2A to 10A:

The same procedure as defined in Example 1A was conducted except that the coating agent composition was changed to those shown in Table 1, thereby obtaining polyester films. As a result, it was confirmed that the thus obtained polyester films exhibited a good adhesion property as shown in Table 2.

### Comparative Examples 1A to 4A:

The same procedure as defined in Example 1A was conducted except that the coating agent composition was changed to those shown in Table 1, thereby obtaining polyester films. As a result of evaluation of the thus obtained polyester films, it was confirmed that the respective polyester films had a poor adhesion property as shown in Table 2.

### Examples 1B to 10B:

The same procedure as defined in Example 1A was conducted except that the coating agent composition was changed to those shown in Table 2, thereby obtaining polyester films. As a result, it was confirmed that the thus obtained polyester films exhibited a good adhesion property as shown in Table 3.

### Comparative Examples 1B to 6B:

The same procedure as defined in Example 1A was conducted except that the coating agent composition was changed to those shown in Table 2, thereby obtaining polyester films. As a result of evaluation of the thus obtained polyester films, it was confirmed that the respective polyester films had a poor adhesion property as shown in Table 3.

**Table 1**

| Coating solution | Components | Weight ratio of solid content |
|---|---|---|
| 1A | U1/C1/F1 | 80/14/6 |
| 2A | U1/C1/F1 | 70/24/6 |
| 3A | U1/C1/F1 | 60/34/6 |
| 4A | U1/C1/F1 | 30/64/6 |
| 5A | U1/C1/C3/F1 | 60/24/10/6 |
| 6A | U1/C1/C4/F1 | 60/24/10/6 |
| 7A | U2/C1/F1 | 60/34/6 |
| 8A | U2/C1/C3/F1 | 60/24/10/6 |
| 9A | U2/C1/C4/F1 | 60/24/10/6 |
| 10A | U1/C2/F1 | 60/34/6 |
| 11A | U1/C2/C3//F1 | 60/24/10/6 |
| 12A | U1/F1 | 94/6 |
| 13A | U1/C4/F1 | 60/34/6 |

**Table 2**

| Examples and Comp. Examples | Coating solution | Coating amount (g/m²) | Adhesion property 1 | Adhesion property 2 |
|---|---|---|---|---|
| Example 1A | 1A | 0.06 | C | C |
| Example 2A | 2A | 0.06 | B | B |
| Example 3A | 3A | 0.06 | A | A |
| Example 4A | 4A | 0.03 | A | A |
| Example 5A | 4A | 0.06 | A | A |
| Example 6A | 5A | 0.06 | A | A |
| Example 7A | 6A | 0.06 | A | A |
| Example 8A | 7A | 0.06 | A | A |
| Example 9A | 8A | 0.06 | A | A |
| Example 10A | 9A | 0.06 | A | A |
| Comp. Example 1A | 10A | 0.06 | C | D |
| Comp. Example 2A | 11A | 0.06 | D | D |
| Comp. Example 3A | 12A | 0.06 | D | D |
| Comp. Example 4A | 13A | 0.06 | D | D |

**Table 3**

| Coating solution | Components | Weight ratio of solid content |
|---|---|---|
| 1B | U3/C1/F1 | 80/14/6 |
| 2B | U3/C1/F1 | 74/20/6 |
| 3B | U3/C1/F1 | 60/34/6 |
| 4B | U3/C1/F1 | 10/84/6 |
| 5B | U1/C1/F1 | 60/34/6 |
| 6B | U1/C1/F1 | 30/64/6 |
| 7B | U3/C5/F1 | 60/34/6 |
| 8B | U2/C1/F1 | 60/34/6 |
| 9B | U4/C1/F1 | 60/34/6 |
| 10B | U3/F1 | 97/3 |
| 11B | C1/F1 | 97/3 |
| 12B | U3/C4/F1 | 60/34/6 |
| 13B | U3/C6/F1 | 60/34/6 |
| 14B | U3/C3/F1 | 60/34/6 |

**Table 4**

| Examples and Comp. Examples | Coating solution | Coating amount (g/m²) | Adhesion property 1 | Adhesion property 2 |
|---|---|---|---|---|
| Example 1B | 1B | 0.03 | B | B |
| Example 2B | 2B | 0.03 | A | A |
| Example 3B | 3B | 0.03 | A | A |
| Example 4B | 3B | 0.06 | A | A |
| Example 5B | 4B | 0.03 | A | A |
| Example 6B | 5B | 0.03 | A | A |
| Example 7B | 5B | 0.06 | A | A |
| Example 8B | 6B | 0.03 | A | A |
| Example 9B | 7B | 0.03 | B | B |
| Example 10B | 8B | 0.03 | B | B |
| Comp. Example 1B | 9B | 0.03 | D | D |
| Comp. Example 2B | 10B | 0.03 | D | D |
| Comp. Example 3B | 11B | 0.03 | C | D |
| Comp. Example 4B | 12B | 0.03 | D | D |
| Comp. Example 5B | 13B | 0.03 | D | D |
| Comp. Example 6B | 14B | 0.03 | C | C |

### INDUSTRIAL APPLICABILITY

The film of the present invention can be suitably used in the applications in which a good adhesion property to a micro-lens layer or a prism layer is required, such as, for example, a backlight unit for liquid crystal displays.

## Claims

1. A laminated polyester film comprising:
a polyester film and
a coating layer which is formed on at least one surface of the polyester film and which comprises a urethane resin and an isocyanate compound derived from an aliphatic isocyanate or an alicyclic isocyanate.

2. A laminated polyester film according to claim 1, wherein the aliphatic isocyanate is hexamethylene diisocyanate.

3. A laminated polyester film comprising:
a polyester film and
a coating layer which is formed on at least one surface of the polyester film and which comprises a urethane resin having a polycarbonate structure and an isocyanate-based compound.

4. A laminated polyester film according to claim 3, wherein the urethane resin having a polycarbonate structure has a glass transition point of not higher than 0°C.

5. A laminated polyester film according to claim 3 or 4, wherein the isocyanate-based compound is an aliphatic isocyanate or an alicyclic isocyanate.
